# EUROPEAN PATENT APPLICATION

(11) **EP 0 798 650 A2**
(43) Date of publication of application: **01.10.1997**
(21) Application number: 97104660.2
(22) Date of filing: 19.03.1997
(51) Int. Cl.: G06F 15/02

(54) **Electronic wallet**

(30) Priority: 29.03.1996 US 624285
(71) Applicant: MOTOROLA, INC., Schaumburg, IL 60196 (US)
(72) Inventor: Lebby, Michael S., Apache Junction, Arizona 85219 (US); Lachimowicz, Karen E., Laveen, Arizona 85339 (US)
(74) Representative: Gibson, Sarah Jane

(57) **Abstract**

A multiple piece body (11) having a first body (12) and a second body (15) is provided. The first body (12) and the second body (15) are hingeably affixed such that the first body (12) and the second body (15) are capable of being closed on each other. A flexible covering (23) mounted to the multiple piece body (11) such that flexible covering (23) forms a pocket-like opening (24), similar to that used for placement of currency in a conventional wallet. A computer, including a central micro-processing unit (50) for manipulating data, memory for data storage, an input for entering data, and an output for removing data is located in the multiple piece body (11). A plurality of electronic devices being housed within the multiple piece body (11). A plurality of optical displays (18) and (20) operably coupled to electronics (44), thereby enabling data to be optically displayed.

## Description

### Background of the Invention

This invention relates, in general, to optical displays and, more particularly, to optical displays and interfaced electronics manufactured in the form of an electronic wallet.

Portable communications transceivers, such as cordless and cellular telephones, pagers, data banks and the like, are becoming increasingly popular. Generally, these electronic products contain a means of at least one interface with the user. This interface can be made through a number of available techniques, such as, but not limited to, audio, visual, or even vibration. In some instances it is possible to send visual complete messages, including alpha-numerics and/or graphics by way of novel pagers. Unfortunately, with respect to the visual interface, a single display typically is available even though users may like or require more than one visual image to be displayed at any one time, or greater amounts of information contained within one display.

It is becoming quite common for the average individual to carry with them on a daily basis a pager, a cellular telephone, a small electronic address or data file, a clock/alarm, a micro-recorder, etc. In addition, most individuals carry on their person a wallet and/or organizer. Articles included within the typical wallet and/or organizer are currency, addresses, datebooks, calendars, notes, SMART CARDS, etc. The problem is that it is difficult and unwieldy to carry wallets and/or organizers as well as additional various communication transceivers, such as pagers and other devices, as well as small electronic devices, such as clocks, alarms, data storage devices, micro-recorders, etc.

In addition, another hardship incurred by the typical user of electronic devices, namely those utilizing displays, is that the display text or graphics typically have available only one screen that is capable of displaying only a small amount of information, for use by the user in interfacing with the electronic product or unit. However, even though the single screen actually displays a variety of images, e.g., data, text, video, or graphics, the unit or the product is not designed to be utilized or incorporated into a wallet form, thereby requiring the user to carry a variety of components, instead of one combination of components in a user friendly embodiment. Electronic products, such as those mentioned above and additionally lap-top computers, palm-top computers, personal digital assistants, facsimile devices, etc., are not optimally designed to be utilized and interfaced into a conventional wallet carried by the user, thereby making these electronic products difficult to carry.

In the instance where the operator requires a visual display on a communication transceiver to supply the operator with a visual message or graphical image, as previously stated, there exists a problem in that visual displays on prior art communications receivers are extremely limited in size and require relatively high electrical power as well as a great amount of area to be sufficiently large to produce a useful display.

In the prior art, for example, it is common to provide visual displays utilizing liquid crystal displays, directly viewed light emitting diodes, etc. These produce very large and cumbersome displays that greatly increase the size of the transceiver and require relatively large amounts of power. Further, such displays, when used on small electronic devices, such as pagers, greatly limit the amount of message that could be received.

In one instance, the prior art includes a scanning mirror to produce a visual display but again this requires relatively large amounts of power and is very complicated and sensitive to shock. Also, the scanning mirror causes vibration in the unit that substantially reduces visual comfort and acceptability.

Thus, it would be highly desirable to provide for an electronic wallet that includes various electronic devices, and optical displays, while maintaining size and compactness of the conventional wallet.

Accordingly, a device that incorporates small electronic devices, e.g., a pager, a datebook, a clock/alarm, an informational wire service receiver, a micro-recording device, a SMART CARD reader and/or provides for data storage, in addition to providing a means for viewing large amounts of information received by the device, such as in the form of a miniature virtual image, would be highly advantageous.

It is a purpose of the present invention to provide a new and improved electronic wallet with at least one of a direct view display and a miniature virtual image display, that additionally includes small electronic devices, such as a pager, a data bank, a micro-recorder, etc. in the form of a conventional wallet.

It is a further purpose of the present invention to provide a plurality of optical displays with associated electronic controls that allows a user to interface with the unit and its functional components.

It is a still further purpose of the present invention to provide a new and improved electronic wallet that incorporates, portable electronic devices, such as a pager, a data bank, a clock/alarm, a SMART CARD reader, etc. with at least one of a direct view display and a miniature virtual image display that substantially reduces the amount of power required in all components.

### Summary of the Invention

Briefly stated, provided is a multiple piece unit composed of a first body, substantially planar in form, defining a plurality of major surfaces, and a second body, substantially planar in form, defining a plurality of major surfaces. The multiple piece unit being made of a semi-rigid molded material. The first body and the second body are affixed and hinged together such that a first major surface of the first body is capable of being closed on a first major surface of the second body. There is provided a leather or leather-like flexible covering, positioned to cover and form a pocket-like opening for the storage of currency, or the like, on the exterior side of the multiple piece unit such as found in a conventional wallet. The size of the multiple piece unit is such that it is similar to a conventional wallet. Electronics including a processor for manipulating data, memory for data storage, an input for entering data, and an output for removing data is located in the multiple piece body. A plurality of optical displays located on the surfaces of the first and second body, and in an alternative embodiment, additional displays contained between the first and second body, in the form of display pages, are operably coupled to the electronics, thereby enabling data to be optically displayed within the plurality of optical displays.

### Brief Description of the Drawings

The novel features believed characteristic of the invention are set forth in the claims. The invention itself, however, as well as other features and advantages thereof will be best understood by reference to detailed descriptions which follow, when read in conjunction with the accompanying drawings, wherein:
FIG. 1 is a view in perspective of an electronic wallet embodying the present invention;
FIG. 2 is a view in perspective, similar to FIG. 1, of an electronic wallet of the present invention when closed;
FIG. 3 is an end view of an electronic wallet of the present invention, illustrating a plurality of control and external interface connections;
FIG. 4 is a side view of yet another embodiment of an electronic wallet;
FIG. 5 is a functional block diagram of the electronic wallet of the present invention;
FIG. 6 is an enlarged sectional view as seen from 6-6 of FIG. 4;
FIG. 7 is an enlarged simplified schematic view of a miniature virtual image display similar to that in FIG. 4;
FIG. 8 is a simplified block diagram of the electronics associated with the miniature virtual image display of FIG. 7;
FIG. 9 is an enlarged view in top plan of an LED array, portions thereof broken away, forming a portion of the electronics of FIG. 8;
FIGS. 10, 11 and 12 are enlarged sectional views of other miniature virtual image displays usable in the electronic wallet of the present invention; and
FIG. 13 is a view in perspective illustrating a typical view as seen by the operator of the electronic wallet of FIG. 1.

### Detailed Description of the Drawings

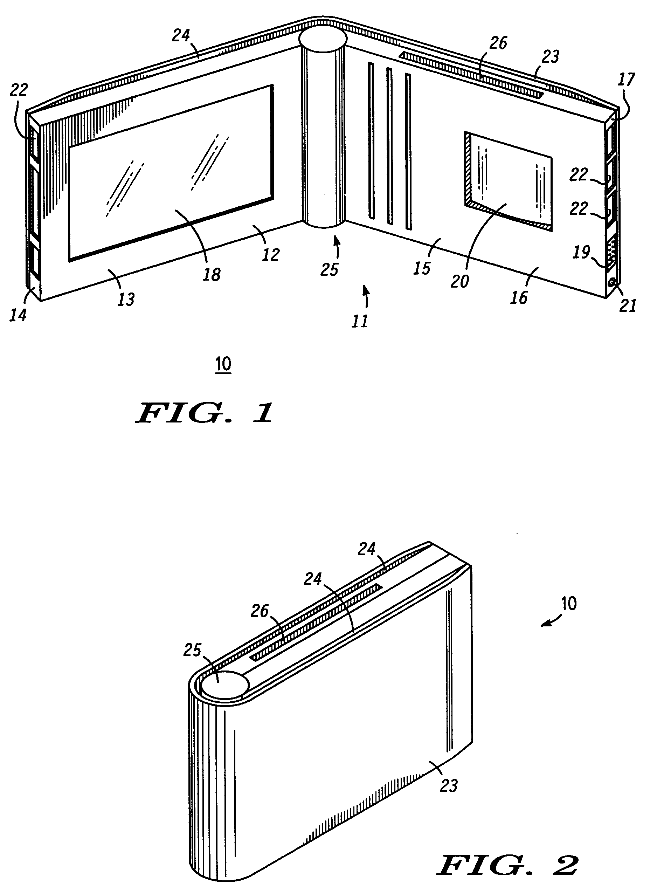

FIG. 1 illustrates an electronic wallet 10 or more specifically an optoelectronic intelligent wallet that includes several main elements or features. Illustrated is electronic wallet 10 composed of a multiple piece body 11, namely a first substantially planar body 12, defining a first major surface 13 and an edge surface 14, and a second substantially planar body 15 defining a first major surface 16 and an edge surface 17, an audio input/output 19, a plurality of external input/output connection ports 21, a plurality of function buttons, or control keys 22 and a plurality of displays 18 and 20, through which information may be viewed by the user as a direct view image and/or miniature virtual image, dependent upon the integrated display component.

First body 12 and second body 15 are hingedly attached so as to be pivotal between a closed position, shown in FIG. 2, in which first major surface 13 of first body 12 is capable of being closed on first major surface 16 of second body 15, and an open position, as shown in FIG. 1, in which a direct view display 18 and a miniature virtual image display 20 are accessible for operation of electronic wallet 10. In addition, electronic wallet 10 contains audio input/output 19, external input/output connection ports 21 and control keys 22 positioned on edge surfaces 14 and 17, therefore accessible when electronic wallet 10 is in an open or closed position. It should be understood that the positioning of audio input/output 19, input/output connection ports 21 and control keys 22 can be on any convenient surface of electronic wallet 10, so as to be easily accessible by the user when electronic wallet 10 is in an open and/or closed position.

In the present embodiment, for purposes of explanation only, electronic wallet 10 includes portable electronic equipment. More specifically, electronic wallet 10 includes any number of portable electronic devices, such as portable communications equipment, such as a two-way communication device, in the form of a radio frequency receiver and a radio frequency transmitter, infra-red communications utilizing light emitting diode/vertical cavity surface emitting laser technology, and/or a paging device. In addition, electronic wallet 10 can include additional portable electronic devices such as a data bank or file, a compact disk reader, a SMART CARD storage and reader device, a micro-recorder, a clock/alarm, etc.

Multiple piece body 11 of electronic wallet 10 typically is made by any suitable well-known material in the art, such as plastics, metals, resins, or the like, as well as being formed by any well-known method in the art, such as molding, milling, or the like. However, in a preferred embodiment of the present invention, high impact plastic materials are injection molded to form multiple piece body 11.

Illustrated in FIG. 2 is a view in perspective, similar to FIG. 1, of electronic wallet 10 of the present invention in a closed position. Specifically illustrated are surfaces of multiple piece body 11, covered with a flexible covering 23, composed of leather or a leather-like material and defined by a plurality of edges, mounted on an opposite side of major surfaces 13 and 16. Flexible covering 23 is fixably mounted to multiple piece body 11, on at least two of the plurality of edges to form a pocket-like opening 24. In the disclosed preferred embodiment, flexible covering 23 is mounted to multiple piece body 11 on three of the plurality of edges, thereby forming pocket-like opening 24, but it should be understood that flexible covering 23 can be mounted to multiple piece body 11 on as few as two of the plurality of edges. Pocket-like opening 24 is accessible when the first body 12 and the second body 15 are in an open position As shown in FIG. 1, the mounting of flexible covering 23 defines pocket-like opening 24, so as to simulate functionality and appearance of a typical wallet. Pocket-like opening 24 serves to store currency, or the like, similar to a conventional wallet. It should be understood that first body 12 and second body 15 are sometimes made of an even greater number of component pieces (not shown) that are assembled together to form the electronic wallet 10 of the present invention, however for the sake of simplicity, these engineering details have been omitted in order to clearly present the present invention. As illustrated in FIG. 2, major surface 13 and major surface 16, lie one on the other when electronic wallet 10 is in a closed position, resembling a conventional wallet in size and form.

Electronic wallet 10 illustrated in FIGS. 1 and 2, is assembled with first body 12 and second body 15 being joined or connected along an edge of each body. More specifically, an edge of first body 12 and an edge of second body 15 are hingeably joined or connected at point 25. Joining of first and second bodies 12 and 15 is achieved at point 25 by any suitable method, such as hinges or the like.

Generally, multiple piece body 11 is designed and constructed such that included are a variety of electronics (discussed presently), for operable interfacing and/or connection of the audio input/output 19, the input/output connection ports 21, the plurality of control keys 22 and the plurality of displays 18 and 20. The electronics of multiple piece body 11 include a computer, more specifically a plurality of components such as a central Micro-Processing Unit (MPU), a memory, logic circuitry, and the like that are interconnected and fitted into multiple piece body 11. Additionally, it should be noted that specific positioning of the various electronic components in multiple piece body 11 is application specific, thus enabling a wide range of locations for the electronic components.

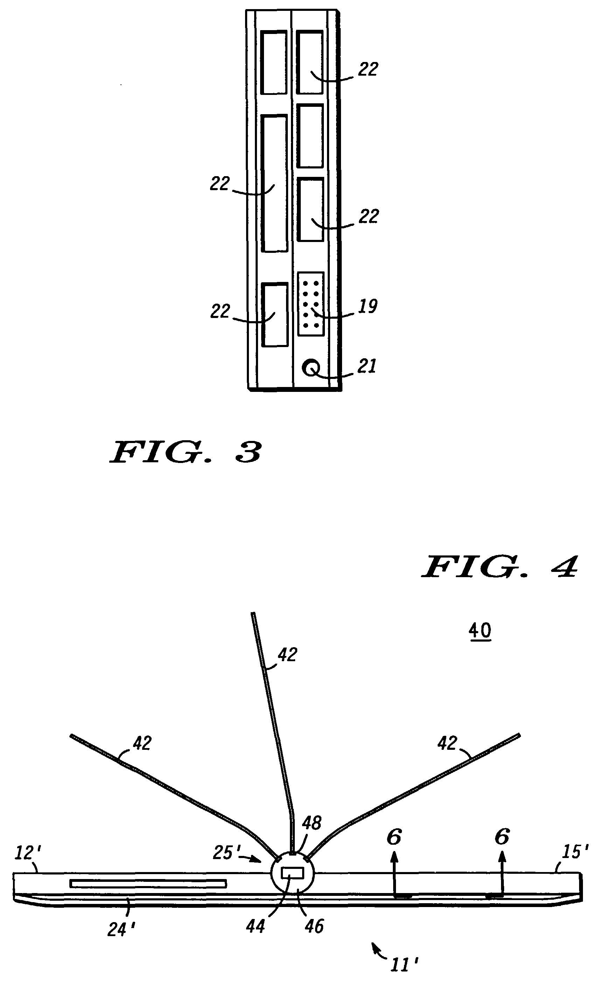

Referring now to FIG. 3, illustrated is an end view of the audio input/output 19, input/output connection ports 21, and function buttons or control keys 22 of electronic wallet 10 of the present invention. The audio input/output 19, input/output connection ports 21 and the plurality of function buttons or control keys 22 are made by any suitable method, such as electromechanical, electronic or the like. The audio input/output 19, input/output connection ports 21, and plurality of function buttons or control keys 22 are located for convenient use by the operator so as to select a variety of controls or electronic functions, such as contrast, brightness, cursor movement, mode of operation, interfacing, etc. Control keys 22, for example, include a standard OFF-ON switch and a finger control device such as a miniature trackball or a touch pad. The plurality of input/output connection ports 21 are available for the user to couple electronic wallet 10 to a variety of electronic accessories (not shown), such as a telephone line, personal computer, personal digital assistant, television receiver, WEB server, file server, or the like.

There is provided a data input system, composed of an input apparatus 26, as shown in FIGS. 1 and 2, that provides several other alternatives for reading or inputting information or data into electronic wallet 10, such as a compact disc drive, a floppy-disk drive, a SMART CARD reader, or the like, thus enabling a wide variety of data or information to be entered into electronic wallet 10. Additionally, it should be understood that input apparatus 26 is used in several modes of operation, such as a read mode, a write mode, or a combination of both read and write modes. It is disclosed that in the instance where a SMART CARD reader is incorporated into electronic wallet 10, that there is provided a specific space for storage of the smart card that while placed in this storage space, the SMART CARD reader can be activated, and the user can view the information contained on the SMART CARD through direct view display 18 or miniature virtual image display 20. Additionally, there is provided space or slots for the storage of standard credit cards typically found in wallets and as illustrated in FIG. 1.

The plurality of displays, namely a direct view display 18 and a miniature virtual image display 20 are located on first major surfaces 13 and 16 of first body 12 and second body 15, respectively as shown in FIG. 1. Displays 18 and 20 allow electronic wallet 10 to enable the user to ascertain general types of information regarding data or information stored in the electronics of electronic wallet 10, such as data bank or file type information, or to receive transmitted communications. Displays 18 and 20 are made by any suitable method or technology, such as, but not limited to, liquid crystal display technology, including polymer based liquid crystal displays, vacuum field emission device technology, electro-luminescent technology, plasma liquid crystal technology, light emitting diode technology, including organic light emitting diode arrays, laser display technology, including vertical cavity surface emitting laser arrays, or the like. For simplicity, light emitting diode technology will be utilized throughout this description for display 20 and liquid crystal display technology will be utilized through this description for display 18. However, it should be understood that liquid crystal displays can be used for both display 18 and 20 of the present invention.

Electronic wallet 10 further includes the electronics for a complete pager, similar in operation to standard pagers presently on the market, as well as the previously named electronic devices. It should be understood that any number, consisting of only one to many, of electronic devices can be incorporated into the electronic wallet 10 of the present invention. The pager device incorporated into the electronic wallet 10 of the present invention, as stated, is similar to those currently found on the market, except that in this specific embodiment larger messages or combinations of alphanumerics and graphics could be received and viewed through miniature virtual image display 20 (discussed presently).

FIG. 4 is a side view of yet another embodiment of an electronic wallet 40. It should be understood that similar features or elements previously described in FIGS. 1-3 will retain their original identifying numerals, having a prime added to note a different embodiment.

As can be seen in FIG. 4, electronic wallet 40 contains in addition to the plurality of components described with reference to the first embodiment illustrated in FIGS. 1-3, a plurality of page displays 42. More specifically, FIG. 4 illustrates a multiple piece body 11', composed of a first and second body, 12' and 15' respectively, of electronic wallet 40 positioned in an open position. Page displays 42 are hingeably joined at a point 25', in addition, point 25' hingeably joins multiple piece body 11', thus enabling some of the plurality of page displays 42 to be visible and usable. It is disclosed to utilize a third body 46 having a plurality of edges to hinge first body 12', second body 15' and page displays 42 together. Page displays 42 of electronic wallet 40 can be configured to be simply page inserts that contain no electronic components, and are used simply for the storage of credit cards, business cards, or the like. In the alternative, and as illustrated in FIG. 4, page displays 42 are coupled to electronics 44 and contain direct view displays, thus allowing the user to display further amounts of information. The plurality of page displays 42 are made by any suitable technology, such as, but not limited to, liquid crystal display technology, vacuum field emission device technology, electro-luminescent technology, plasma liquid crystal technology, light emitting diode technology, including organic light emitting diodes, laser display technology, or the like. Additionally, physical characteristics of the plurality of page displays 42, differ depending upon the specific application selected and the specific technology selected to make the plurality of page displays 42. For example, flexibility of the plurality of page displays 42 is accomplished by using polymer based liquid crystal display technology or organic light emitting diodes, which utilize flexible substrates and allow page displays 42 entire pager to be "flexible"

Electronics 44, of electronic wallet 40, is shown as being located in third body 46, however, it should again be understood that the mounting of electronics 44 is application specific, thus enabling electronics 44 to be located anywhere in multiple piece body 11'. It should be understood that electronics 44 is operably connected to the various features and elements described hereinabove, thereby enabling electronics 44 to control the various elements and features.

The plurality of page displays 42 are mounted to a surface of third body 46 by any suitable method. More specifically, in the instance where page displays 42 are electronically interfaced with electronics 44, the plurality of page displays 42 are mounted in a plurality of electromechanical coupling devices 48. The plurality of electromechanical coupling devices 48 are operably coupled to individual page displays of the plurality of page displays 42 so as to enable information stored in electronics 44 to be displayed correctly on the plurality of page displays 42. In the instance where a plurality of direct view displays are incorporated by utilizing a plurality of page displays 42, the turning of an individual page of the plurality of page displays 42 would enable electronics 44 to update the plurality of page displays 42, thereby enabling the user to look back and forth through the displayed information on the plurality of page displays 42 so as to obtain a complete overall scope of the displayed material.

In function, several electronic modes may be selected to improve convenience and efficiency of electronic wallet 10 or 40. For example, when electronic wallet 10 or 40 is in a closed position, the user can configure the electronics to turn off the displays, and/or any additional electronic devices contained within the electronic wallet 10 or 40 that the user is not utilizing at that time to save on power consumption. At the same time, the user can configure the specific devices to be remain in an ON position when electronic wallet 10 or 40 is in a closed position, such as the pager, clock/alarm, etc., or configure the electronic wallet 10 or 40 so that the displays 18 and 20 will be usable in the open position, thus enabling graphical and textual materials to be displayed on displays 18 and 20.

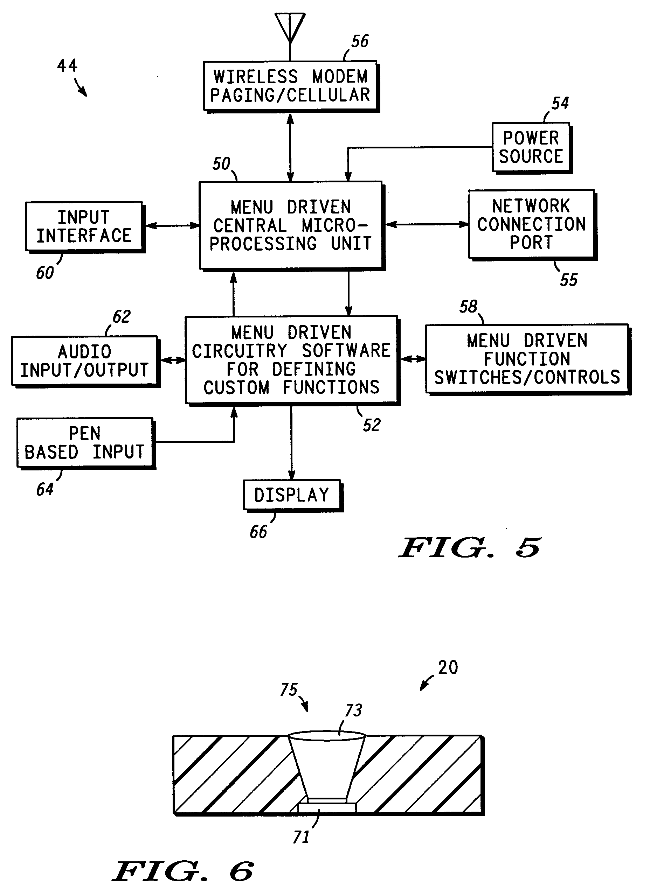

Referring now to FIG. 5, generally, electronics 44 is composed of a central Micro-Processing Unit (MPU) 50 and peripheral accessories (discussed presently), interconnected by utilizing well-known methods in the art. Associated with central MPU 50 are circuitry/software 52 for defining custom functions found in the menu driven central MPU 50 that is capable of being somewhat modified to suit an individual user, thus allowing customization of some of the peripheral accessories and the form of displays utilized in electronic wallet 10 or 40.

Power source 54 is connected to central MPU 50, thus providing power for essential functions of central MPU 50. It should be understood that any suitable power source is used for power source 54, namely a battery source, but it should be understood that in the alternative, an AC power source can be utilized.

As shown in FIG. 5, central MPU 50 is networked so that data or information can be downloaded or uploaded between a network and central MPU 50. Networking of the central MPU 50 is achieved by a variety of methods such as direct electrical connection utilizing a network connection port 55, more specifically, utilizing the plurality of input/output connection ports 21 of electronic wallet 10 or 40 (shown in FIGS. 1 and 3), a wireless link 56 having a radio frequency receiver and a radio frequency transmitter for paging and cellular communications, or the like. Functional switches or controls 58, more specifically buttons or control keys 22 of electronic wallet 10 or 40, are connected to circuitry/software 52 to enable utilization of functional systems defined by the software, firmware, and central MPU 50. Generally, functional switches or controls 58 are activated by a variety of mechanisms, such as pressing one of the plurality of function buttons or control keys 22 shown in FIGS. 1 and 3. Alternatively, functions or controls 58 may be menu driven with a cursor or stylus on a page of either the plurality of page displays 42 or displays 18 and 20.

An input interface 60 is coupled to central MPU 50, thus allowing input of data into central MPU 50, more specifically input apparatus 26 of electronic wallet 10 or 40. By way of example, input interface 60 can be a variety of different structures, such as a floppy disk drive, a compact disc drive, a hard disk, a SMART CARD reader, or the like. By enabling input interface 60 to be interactive with central MPU 50, continual updates of information are capable of being exchanged between input interface 60 and central MPU 50 so that the user can easily and efficiently utilize the data inputted through input interface 60.

Audio input/output 62, generally similar to audio input/output 19, more specifically a microphone, as shown in FIG. 1 of electronic wallet 10 or 40, is coupled to circuitry/software 52 so that audio information or data are inputted into circuitry/software 52 and ultimately utilized and processed by central MPU 50. Audio input/output 62 enables central MPU to be voice operated, thus enabling voice commands to be issued to central MPU 50. Further, since audio input is coupled to central MPU 50, audio input/output 62 enables the recordation of voice memos as desired, when a micro-recording device is incorporated into electronic wallet 10 or 40 as well as audible signals emitted such as used with pager devices. Additionally, audio input/output 62 allows the user to listen to information entered into central MPU 50. For example, digital or analog signals are entered into the central MPU 50, thus enabling display 66 and audio output of audio input/output 62 to be used as a multimedia display.

A pen based input 64 is incorporated in some specific embodiments being coupled to circuitry/software 52 for inputting messages by a cursor or in handwriting.

Electronic wallet 10 or 40 of FIGS. 1-4 is constructed so as to include miniature virtual image display 20, as previously discussed. To aid in understanding this component of the invention, a simplified sectional view through miniature virtual image display 20, as seen from line 6-6 in FIG. 4, is illustrated in FIG. 6. Miniature virtual image display 20 includes image generation apparatus 71 for providing a complete image to a fixed optical system 73, which in turn produces a virtual image viewable by the operator through an aperture 75. Fixed optical system 73 is constructed to magnify the entire complete image from image generation apparatus 71, without utilizing moving parts, so that the virtual image viewable through an aperture 75 appears to be very large and is easily discernible by the operator. As previously stated, miniature virtual image display 20 allows for the generation of vast amounts of alphanumeric and/or textual material.

By producing a greatly magnified (>x10) virtual image from the very small complete image of image generation apparatus 71, fixed optical system 73 can be constructed relatively small and adds virtually no additional space requirements to multiple piece body 11 of electronic wallet 10 or 40. Optical system 73 is constructed with no moving parts, other than optional features such as focusing, zoom lenses, etc. Further, image generation apparatus 71 requires very little electrical power to generate the complete image and, therefore, adds very little to the power requirements of electronic wallet 10 or 40.

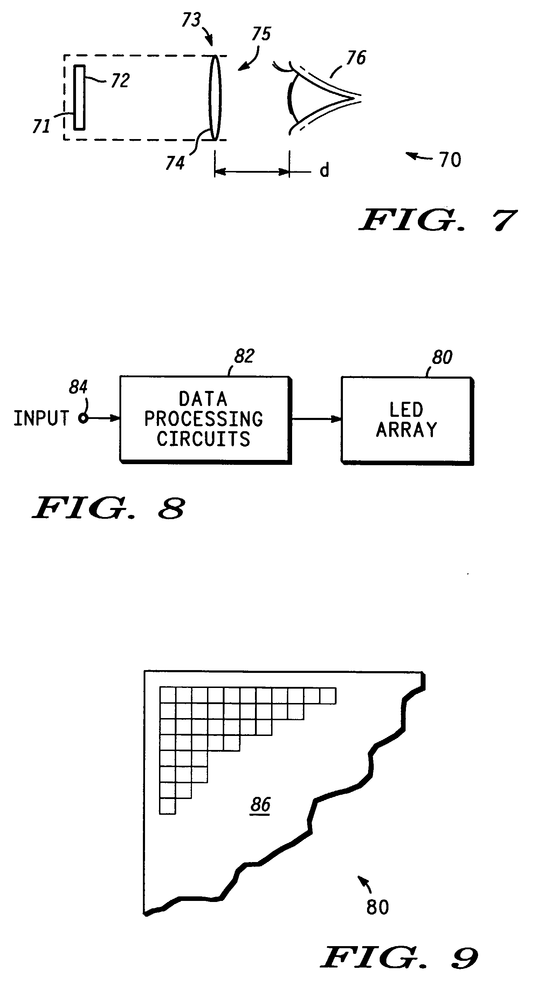

Miniature virtual image display 20 will now be described in more detail with reference to FIGS. 7-9. Referring specifically to FIG. 7, illustrated in a simplified schematic view is an example of a miniature virtual image display 70, generally similar to miniature virtual image display 20 of electronic wallet 10 or 40. Components of the compact virtual image display of FIG. 7 which are similar to components of miniature virtual image display 20 of FIG. 6 are designated with similar numbers so that correlation between the devices can be readily achieved. Miniature virtual image display 70 includes image generation apparatus 71 for providing a complete image on a surface 72. An optical system 73, represented by lens 74, more specifically, either a refractive lens or a diffractive lens, is positioned in spaced relation to surface 72 and produces a virtual image viewable by an eye 76 spaced from an aperture 75 defined by lens 74.

Image generation apparatus 71 is illustrated in more detail in FIG. 8 and includes, for example, semiconductor electronics such as a two-dimensional light emitting device (LED) array 80 driven by data processing circuits 82. Data processing circuits 82 include, for example, logic and switching circuit arrays for controlling each LED in LED array 80. Data processing circuits 82 include, in addition to or instead of the logic and switching arrays, a microprocessor or similar circuitry for processing input signals at an input terminal 84 to produce a desired complete image on a device such as LED array 80. It will be understood that data processing circuits 82 and LED array 80, while illustrated separately for purposes of this description, could be formed on the same semiconductor chip in some applications.

In this specific embodiment LED array 80 is utilized because of the extremely small size that can be achieved and because of the simplicity of construction and operation. It will of course be understood that light emitting devices include, but are not limited to, semiconductor diodes, organic diodes, etc. Referring specifically to FIG. 9, a plan view of LED array 80 is illustrated in which the LEDs are formed in a regular pattern of rows and columns on a single semiconductor chip 86. Portions of semiconductor chip 86 are broken away to simplify the drawing but it should be understood that many of the other circuits to be described herein could be included on the same chip. By addressing specific LEDs by row and column in a well known manner, the specific LEDs are energized to produce a complete image, defined by a plurality of pixels positioned in rows and columns cooperating to generate the complete image. Digital or analog data is received at input terminal 84 and converted by data processing circuits 82 into signals capable of energizing selected LEDs of LED array 80 to generate the predetermined complete image.

It will be understood by those skilled in the art that two-dimensional LED array 80 and semiconductor chip 86 are greatly enlarged in the figures. Generally, semiconductor chip 86 ranges from approximately 2 centimeters on each side to 1 millimeter on each side and, in a preferred embodiment of the present invention, the size of LED array 80 ranges from 1.0 centimeter on a side to 0.1 centimeter on a side. Further, each light emitting device or pixel ranges in size approximately from 50.0 microns to 0.25 micron on a side having a preferred range from 20.0 microns to 0.5 micron. It should be understood that the actual light emitting device array is much smaller, because bonding pads, etc. add several millimeters of area on each side. Generally, the larger size chips simply mean that more light emitting devices are used in the array to provide more definition, color, etc. As the semiconductor technology reduces the size of the chip, greater magnification and smaller lens systems are required.

The fixed optical system 73, as illustrated in FIG. 7, represented schematically by lens 74, is mounted in spaced relation from surface 72 so as to receive the image from surface 72, magnify it an additional predetermined amount and create the aperture 75 within which the virtual image is viewed. In the present embodiment, lens 74 magnifies the image ten times (10x). Generally, a magnification of at least ten is required to magnify the complete image sufficiently to be perceived by a human eye. It will of course be understood that the optical system may be adjustable for focus and additional magnification, if desired, or may be fixed in a housing for simplicity.

Eye relief is the distance that eye 76 can be positioned from fixed optical system 73 (which creates viewing aperture 75) and still properly view the image, which distance is denoted by "d" in FIG. 7. Because of the size of lens 74, eye relief, or the distance d, is sufficient to provide comfortable viewing and in the present embodiment is great enough to allow a viewer to wear normal eyeglasses, if desired.

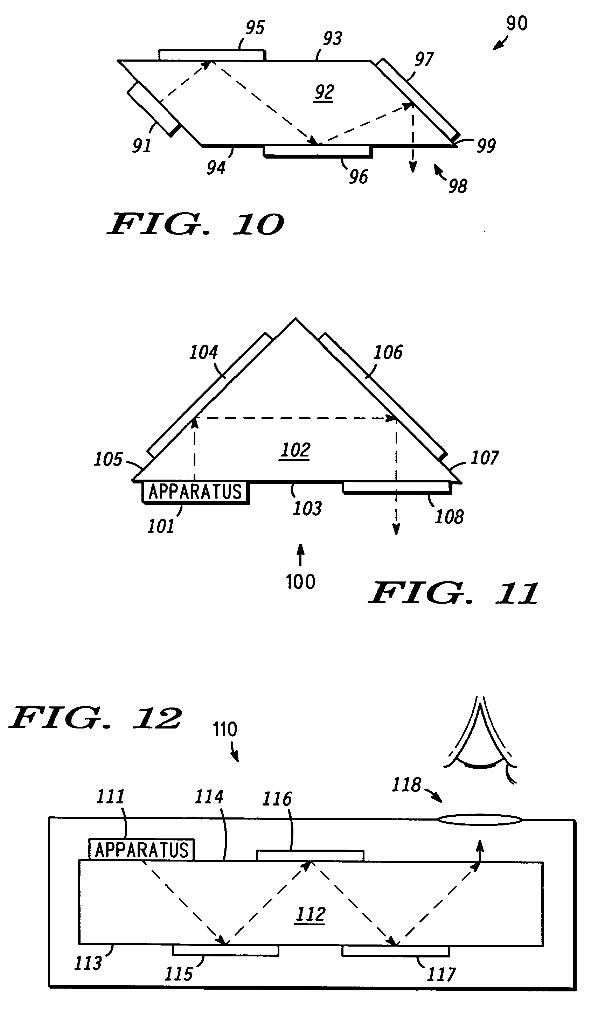

Several examples of optical magnification systems are illustrated in FIGS. 10-12, and may be incorporated into miniature virtual image display 20 of electronic wallet 10 or 40 of the present invention and/or applied externally to electronic wallet 10 or 40. A miniature waveguide virtual image display 90 is illustrated in a simplified schematic view in FIG. 10. Miniature waveguide virtual image display 90 can be utilized as miniature virtual image display 20 of FIGS. 1 - 4 in some embodiments. In miniature waveguide virtual image display 90 image generation apparatus 91, similar to image generation apparatus 71 described above, is affixed to the inlet of an optical waveguide 92 for providing a two-dimensional complete image thereto. Light rays from the complete image at image generation apparatus 91 are directed angularly toward a predetermined area on a first side 93 where they are reflected back toward a second side 94 and ultimately toward a third side 99, generally along an optical path defined by sides 93 and 94. Three diffractive, refractive, or reflective optical elements 95, 96 and 97 are affixed to sides 93, 94 and 99 at the next three predetermined areas, respectively, to which the reflected light rays are directed. Optical elements 95, 96, and 97 provide the required amount of magnification, aberration correction, reflection, and/or filtering so that a virtual image of a desired size is viewable at an aperture 98 defined by the outlet of optical waveguide 92.

Referring to FIG. 11, another specific miniature waveguide virtual image display 100 is illustrated in a simplified schematic. In miniature waveguide virtual image display 100, image generation apparatus 101, similar to image generation apparatus 71 described above, is affixed to the inlet of an optical waveguide 102 for providing a two-dimensional complete image thereto. In miniature waveguide virtual image display 100 an optical waveguide 102 having a generally triangular shape in side elevation is utilized. Image generation apparatus 101 is affixed to a first side 103 of optical waveguide 102 and emanates light rays that travel along an optical path directly to a diffractive, refractive, or reflective optical element 104 affixed to a second side 105. Light rays are reflected from optical element 104 to a diffractive, refractive, or reflective optical element 106 mounted on a third side 107. Optical element 106 in turn reflects the light rays through a final diffractive, refractive, or reflective optical element 108 affixed to the outlet ox optical waveguide 102 in side 103, which optical element 108 defines a viewing aperture for display 100. In this particular embodiment the sides of display 100 are angularly positioned relative to each other so that light rays enter and leave the inlet and outlet, respectively, perpendicular thereto.

An additional miniature waveguide virtual image display 110 is illustrated in a simplified schematic view in FIG. 12. Miniature waveguide virtual image display 110 can be utilized in place of miniature virtual image display 20 of FIGS. 1 - 4 in some embodiments. In miniature waveguide virtual image display 110 image generation apparatus 111, similar to image generation apparatus 71 described above, is affixed to the inlet of an optical waveguide 112 for providing a two-dimensional image thereto. Light rays from the image at image generation apparatus 111 are directed angularly toward a predetermined area on a first side 113 where they are reflected back toward a second side 114 generally along an optical path defined by sides 113 and 114. Three optical elements 115, 116 and 117 are affixed to sides 113 and 114 at the next three predetermined areas, respectively, to which the reflected light rays are directed. Optical elements 115, 116, and 117 provide the required amount of magnification, reflection, aberration correction and/or filtering so that a virtual image of a desired size is viewable at an aperture 118 defined by the outlet of optical waveguide 112.

Miniature waveguide virtual image displays 90, 100 and 110, along with other miniature virtual image displays that can be utilized in conjunction with the present invention, are described in more detail in a U.S. Patent No. 5,224,198, entitled "WAVEGUIDE VIRTUAL IMAGE DISPLAY", issued on June 6, 1993, assigned to the same assignee, and incorporated herein by this reference.

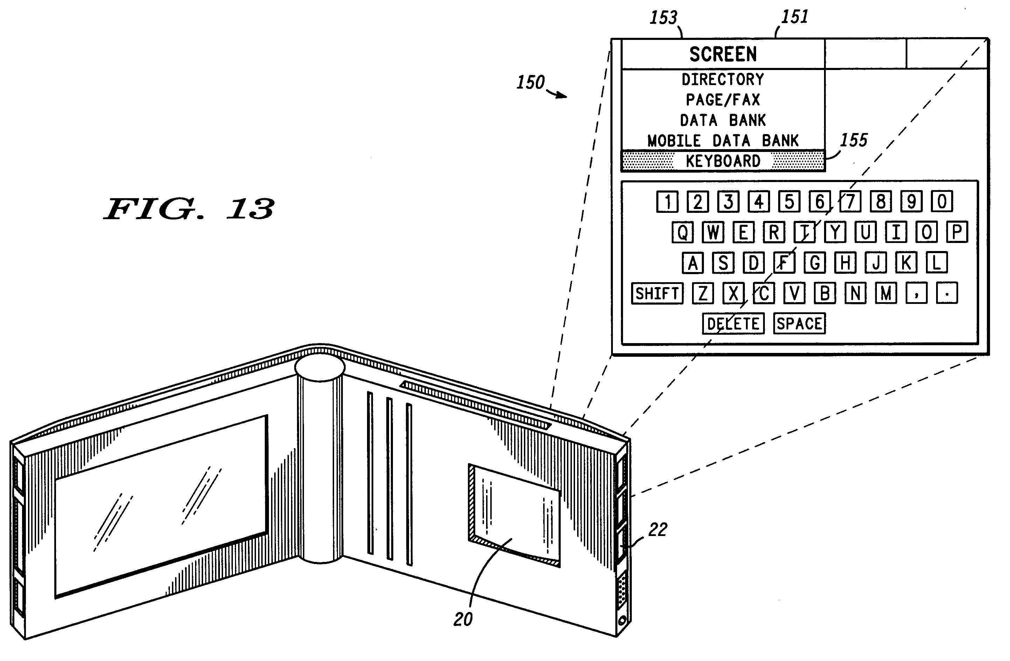

FIG. 13 is a perspective view of electronic wallet 10 and 40 of the present invention, illustrating a typical virtual image 150 seen by an operator looking into viewing aperture 75 of miniature virtual image display 20 as illustrated in FIG. 6. Virtual image 150, as seen in viewing aperture 75, features a pull-down menu 151, which is actuated to the pull-down position by operation of control keys 22. In this particular example, pull-down menu 151 has been selected by placing a manually controllable virtual image cursor 153 on the pull-down selection name for pull-down menu 151, which is SCREEN. It is anticipated that a plurality of different pull-down menus will be provided which can be selected by manipulating finger control keys 22 to move virtual image cursor 153 to the desired title.

Pull-down menu 151 includes a variety of functions, or information selections as illustrated in FIG. 13. In this specific example, pull-down menu 151 includes a phone directory, which may include personal numbers stored in memory, or portions of a complete directory provided by, for example, a telephone base station. Menu 151 further includes a choice of PAGE/FAX information, which might include, for example, pages or fax messages received by electronic wallet 10 or 40 and stored in memory. The DATA BANK function refers to access to base station data banks which, for example, might allow the operator to receive directions or maps to a particular city, etc. of interest. Many other forms of graphical and/or alpha-numeric information might be available to the operator and easily selected by the operator through control of the cursor by manipulation of finger control keys 22.

As illustrated, the operator has selected the final function illustrated on pull-down menu 151, i.e. KEYBOARD, and selection of this function provides a virtual image in aperture 75 of miniature virtual image display 20 of a keyboard 155 or control panel, a typical example of which is illustrated in FIG. 13. The function KEYBOARD replaces the need for the physically large and cumbersome keyboard on electronic wallet 10 or 40. Because keyboard 155 has been eliminated, electronic wallet 10 and 40 can be designed with greater flexibility with regard to its shape and size.

By now it should be appreciated that a novel electronic wallet has been described. The electronic wallet allows for a more convenient and efficient means for incorporating electronic devices, including communication devices, in the form of a conventional wallet. The electronic wallet enables a user to easily carry on their person several small, portable electronic devices, including, but not limited to, a paging device, a data bank or file, an address book, a micro-recorder, a SMART CARD reader, etc. Further, the electronic wallet enables the user to utilize electronic medium material in the form of a standard wallet having a direct view display and a miniature virtual image display.

While we have shown and described specific embodiments of the present invention, further modifications and improvements will occur to those skilled in the art. We desire it to be understood, therefore, that this invention is not limited to the particular forms shown and we intend in the appended claims to cover all modifications that do not depart from the spirit and scope of this invention.

## Claims

1. An electronic wallet characterized by:
a multiple piece body (11) including a first body (12) having a first major surface (13), a second major surface and an edge surface (14), a second body (25) having a plurality of edge surfaces, and a third body (15) having a first major surface (16), a second major surface and an edge surface (17), the edge surface (14) of the first body (12) being hingeably attached to one of the plurality of edge surfaces of the second body (25) and the edge surface (17) of the third body (15), being hingeably attached to another of the plurality of edge surfaces of the second body (25), thereby allowing the multiple piece body (11) to be moved to a position where the first major surface (13) of the first body (12) is capable of being closed on the first major surface (16) of the third body (15);
a flexible covering (23), positioned on the multiple piece body (11), opposite the first major surfaces (13 & 16) of the first (12) and third (15) bodies, to cover an exterior side of the multiple piece body (11) and form a pocket-like opening (24);
electronics (44) located in the multiple piece body (11) including a processor (50) for manipulating data, memory for data storage, an input (21) for entering data, and an output (21) for removing data; and
at least one display (22), capable of generating an image (150) to be viewed by a user as one of a direct view image or a miniature virtual image.

2. An electronic wallet as claimed in claim 1 further characterized by a plurality of page displays (42) operably coupled to the output (52) of the electronics (44) for displaying data from the electronics (44) and being attached to the multiple piece body (11) such that closing the first body (12) onto the third (15) body protects the plurality of page displays (42).

3. An electronic wallet as claimed in claim 2 wherein the plurality of page displays (42) are characterized by being flexible.

4. An electronic wallet as claimed in claim 3 wherein the plurality of page displays (42) are selected from a group consisting of: light emitting diode displays, liquid crystal displays, plasma liquid crystal displays, vacuum field emission displays, polymer displays and electro-luminescent displays.

5. An electronic wallet as claimed in claim 1 further characterized by at least one electromechanical button (22) located on the multiple piece body (11) operably coupled to the electronics (44) for controlling a plurality of functions of the electronic wallet (10) and for advancing data and displaying the data advanced, through the at least one display (20).

6. An electronic wallet as claimed in claim 1 further characterized by a plurality of electronic devices (56) within the multiple piece body (11), the plurality of electronic devices (56) including at least one of a radio frequency receiver, a radio frequency transmitter, a micro-recorder, a data bank, a SMART CARD reader, and a clock/alarm.

7. An electronic wallet as claimed in claim 6 wherein the radio frequency receiver is characterized by a pager.

8. An electronic wallet as claimed in claim 1 further characterized by a data input system (26) operably connected to the input (60) of the electronics (44).

9. A method of forming an electronic wallet characterized by the steps of:
forming a multiple piece body (11) including a first body (12) having a plurality of surfaces (13) and an edge surface (14), and a second body (15) having a plurality of surfaces (16) and an edge surface (17), the first body (12) being hingeably attached to the second body (15);
forming electronics (44) located in the multiple piece body (11) including a processor (50) for manipulating data, memory for data storage, an input for entering data, and an output for removing data;
forming a flexible covering (23), defining a plurality of edges, and being mounted to the multiple piece body (11) on a plurality of the plurality of edges, thereby forming a pocket-like opening (24) on a surface of the multiple piece body (11); and
forming at least one of a direct view display (18) and a miniature virtual image display (20) operably coupled to the output of the electronics (44) for displaying data from the electronics (44), and positioned on the multiple piece body (11) such that closing at least one of the plurality of surfaces (13) of the first body (12) onto at least one of the plurality of surfaces (16) of the second body (15) protects the at least one of a direct view display (18) and a miniature virtual image display (20).

10. A method of forming an electronic wallet as claimed in claim 9 further characterized by the step of forming at least one portable electronic device (56), interfaced with the electronics (44), within the multiple piece body (11).
